# EUROPEAN PATENT APPLICATION

(11) **EP 4 360 787 A1**
(43) Date of publication of application: **01.05.2024**
(21) Application number: 22203871.3
(22) Date of filing: 26.10.2022
(51) Int. Cl.: B23C 5/28, B23C 5/10

(54) **CUTTING TOOL WITH THROUGH COOLANT**

(71) Applicant: Yih Troun Enterprise Co., Ltd., New Taipei City (TW)
(72) Inventor: CHEN, Li-Cheng, New Taipei City (TW)
(74) Representative: Viering, Jentschura & Partner mbB Patent- und Rechtsanwälte

(57) **Abstract**

A cutting tool (10) with through coolant has an elongated shank (11) and a cutting portion (12). An outer peripheral surface of the shank (11) is configured to be surrounded and tightly held by a hole-wall defined by a tool-fixing hole (921) of a machine tool (92). At least one coolant-guiding recess (111) is formed in the outer peripheral surface of the shank (11) and extends along a lengthwise direction of the shank (11). Each coolant-guiding recess (111) forms a coolant channel (112) together with the tool-fixing hole (921). An end of the coolant channel (112) is connected to a coolant-supply system (922). The coolant channel formed by the coolant-guiding recess (111) enables coolant from the coolant-supply system (922) to be jetted toward the cutting portion (12). The cutting tool (10) provides through coolant without drilled holes, thereby saving cost.

## Description

### 1. Field of the Invention

The present invention relates to a cutting tool for machine tools.

### 2. Description of the Prior Arts

A great deal of heat and chips are generated in a machining process, and therefore coolant is jetted directly toward a cutting area to remove heat and evacuate chips.

In a general machine tool, the coolant is delivered to a position nearby the cutting tool via a coolant circuit, and then the coolant is jetted toward a cutting edge of the cutting tool via an independent nozzle at the end of the coolant circuit. However, both the coolant circuit and the nozzle occupy an inner space of the machine tool, and easily interfere with a workpiece to be machined or other components in the machine tool. As a result, a conventional coolant system in the general machine tool is inconvenient to use.

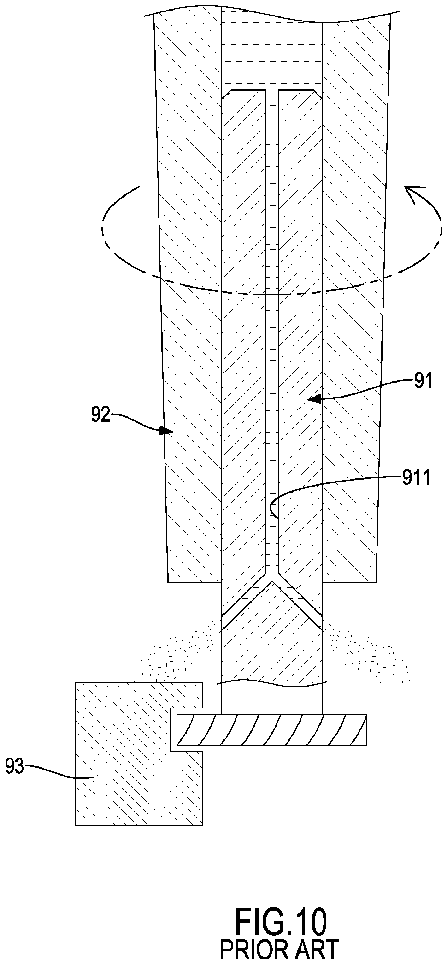

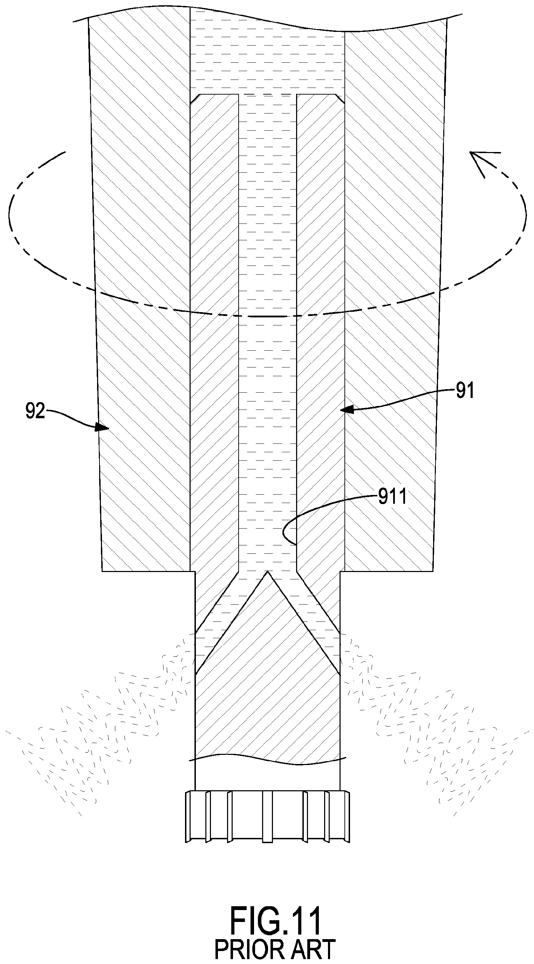

With reference to Fig. 10 and Fig. 11, to solve the interference issue resulting from the coolant circuit and the nozzle, conventional cutting tools 91 with internal coolant passages 911 have been developed. The coolant from the machine tool 92, such as coolant delivered by a coolant-through-spindle system of a milling machine, enters the cutting tool 91 via an inner end of the coolant passage 911, and then the coolant is jetted toward the cutting area via coolant outlets formed on an outer annular surface of the cutting tool 91, thereby saving space and improving cooling performance.

However, the conventional cutting tools 91 with the coolant passages 911 have the following shortcomings:
First, the coolant passages 911 are formed inside the cutting tools 91 by making multiple elongated holes in each of the cutting tools 91 through drilling. However, the cutting tools 91 are made of high hardness metal, and therefore it is very difficult to drill holes in the cutting tool. As a result, manufacturing costs of the conventional cutting tools 91 with internal coolant passages 911 are tremendous.

Second, an outer end of the cutting tool 91 has cutting inserts or has integrally formed cutting edges. In order to ensure the cutting tool 91 has sufficient structural rigidity for machining, the coolant passage 911 cannot extend linearly from the inner end to the outer end of the cutting tool 91, but instead has to make a turn before reaching the outer end to avoid the cutting inserts or the cutting edges. As a result, the coolant may fail to cool down the cutting area because the coolant is blocked by the workpiece 93 or due to other reasons, and resulting in a poor cooling performance.

Third, because the coolant passage 911 cannot extend linearly but instead has to make the turn, the coolant passage 911 has higher friction loss, which reduces flow of the coolant and deteriorates cooling performance.

The main objective of the present invention is to provide a cutting tool with through coolant to reduce cost and to improve cooling performance.

The cutting tool with through coolant is configured to be connected to a machine tool. The machine tool has a tool-fixing hole, and one end of the tool-fixing hole is connected to a coolant-supply system. The cutting tool is configured to be mounted in another end of the tool-fixing hole. The cutting tool has a shank and a cutting portion. The shank is elongated, and two opposite ends of the shank are respectively a shank-outer end and a shank-inner end. An outer peripheral surface of the shank is configured to be surrounded and tightly held by a hole-wall defined by the tool-fixing hole. At least one coolant-guiding recess is formed in the outer peripheral surface of the shank. Each of the at least one coolant-guiding recess extends along a lengthwise direction of the shank, and is configured to form a coolant channel together with the hole-wall of the tool-fixing hole. An end of the coolant channel is connected to the coolant-supply system. The cutting portion is formed on the shank-outer end of the shank and is configured to protrude out from the tool-fixing hole. The cutting portion has at least one cutting edge formed on the cutting portion, or at least one insert is removably mounted to the cutting portion. The coolant channel formed by the at least one coolant-guiding recess enables coolant from the coolant-supply system to be jetted toward the cutting portion.

Installation and use of the present invention is same as that of conventional cutting tools: install the cutting tool to the machine tool with a specialized coolant-supply system, such as a milling machine with a through-spindle coolant system. After installation of the cutting tool, the coolant-guiding recess on the shank forms the coolant channel, thereby providing the cutting tool with through coolant function.

Advantages of the present invention are as follows:
First, the coolant channel is formed by the coolant-guiding recess together with the hole-wall of the tool-fixing hole, and forming of the coolant-guiding recess requires only machining on the outer peripheral surface of the shank. The coolant-guiding recess provides coolant through function when installed on the machine tool, thereby saving tremendous machining cost.

In other words, in terms of forming the of coolant channel, the present invention replaces the conventional deep-hole-drilling process with grooving on the outer peripheral surface of the shank. The present invention is capable of saving tremendous machining cost because grooving on the outer peripheral surface is far more easier than deep-hole-drilling.

Second, because the coolant-guiding recess is formed on the outer peripheral surface of the shank and extends along the lengthwise direction of the shank, the coolant is naturally jetted toward the cutting edge or the insert when the cutting portion is narrower than the shank, or the coolant naturally travels along an outer surface of the cutting portion to the cutting edge or the insert when the cutting portion is wider than the shank. As a result, the present invention enables the coolant to continuously cool down a cutting area by preventing the coolant from being blocked by the workpiece or fail to cool down the cutting area due to any other reason.

Third, due to position and shape of the coolant-guiding recess, the coolant-guiding recess can extend linearly without turning, and therefore greatly reduces friction loss. In other words, the present invention improves cooling performance by eliminating inevitable turning in the conventional cutting tool.

### IN THE DRAWINGS:

Fig. 1 is a perspective view of a cutting tool with through coolant in accordance with the present invention;
Fig. 2 is a schematic side view of the cutting tool in Fig. 1, showing the cutting tool mounted to a tool holder of a machine tool;
Fig. 3 is a sectional top view of the cutting tool taken along line 3-3 in Fig. 2;
Fig. 4 is a schematic operational side view of the cutting tool in Fig. 1, showing the cutting tool cutting a side surface of a workpiece to form a groove;
Fig. 5 is a block diagram, showing the tool holder in Fig. 2 connected to a coolant-supply system;
Fig. 6 is a schematic side view of a second embodiment of a cutting tool in accordance with the present invention;
Fig. 7A is a perspective view of a third embodiment of a cutting tool in accordance with the present invention;
Fig. 7B is a sectional side view of the cutting tool in Fig. 7A;
Fig. 8 is a schematic side view of a fourth embodiment of a cutting tool in accordance with the present invention;
Fig. 9 is a schematic side view of a fifth embodiment of a cutting tool in accordance with the present invention;
Fig. 10 is an operational side view of a conventional cutting tool with through coolant, showing the cutting tool cutting a side surface of a workpiece to form a groove; and
Fig. 11 is an operational side view of another conventional cutting tool with through coolant.

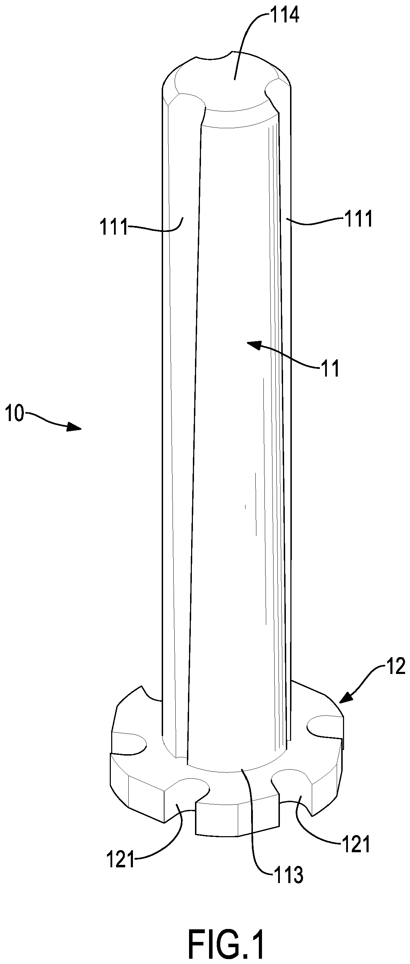

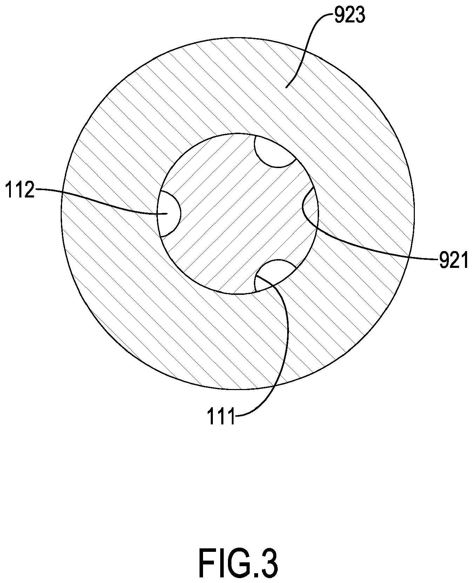

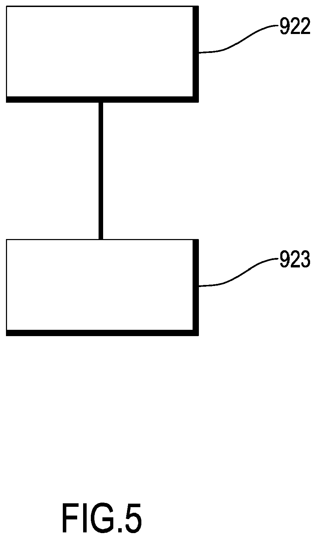

With reference to Figs. 1 to 3 and Fig. 5, a cutting tool 10 with through coolant in accordance with the present invention is configured to be connected to a machine tool 92. The machine tool 92 has a tool-fixing hole 921, and an end of the tool-fixing hole 921 is connected to a coolant-supply system 922 (as shown in Fig. 5). The cutting tool 10 is configured to be mounted in another end of the tool-fixing hole 921. The coolant-supply system 922 pumps coolant to the tool-fixing hole 921 such that the coolant is forced to spurt from the cutting tool 10.

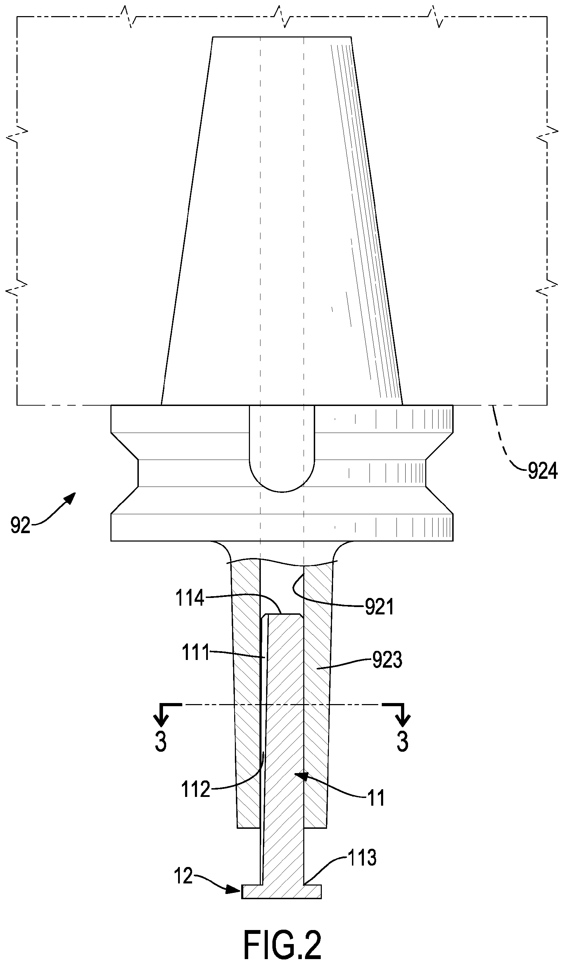

The machine tool 92 is preferably a milling machine, and the cutting tool 10 is preferably a milling cutter. The cutting tool 10 is fixed to a spindle 924 (as shown in Fig. 2) of the machine tool 92 via a tool holder 923. The tool-fixing hole 921 is formed through the tool holder 923. A coolant-supply system 922 is connected to an upper end of the tool holder 923 and pumps coolant to the tool-fixing hole 921 via a top opening of the tool-fixing hole 921.

The cutting tool 10 is mounted in the tool-fixing hole 921 via a bottom opening of the tool-fixing hole 921. In the preferred embodiment, the coolant-supply system 922 is a through-spindle coolant system of the milling machine. The coolant-supply system 922 is a conventional standard system; therefore detailed description of the coolant-supply system 922 is omitted.

The cutting tool 10 has a shank 11 and a cutting portion 12. The shank 11 is elongated, and is preferably a round rod. An outer peripheral surface of the shank 11 is surrounded and tightly held by a hole-wall defined by the tool-fixing hole 921 such that the cutting tool 10 is fixed to the machine tool 92.

Multiple coolant-guiding recesses 111 are formed in the outer peripheral surface of the shank 11. Each of the coolant-guiding recesses 111 extends along a lengthwise direction of the shank 11, and is configured to form a coolant channel together with the hole-wall of the tool-fixing hole 921. An end of the coolant channel 112 is connected to the coolant-supply system 922, allowing the coolant-supply system 922 to pump coolant to the coolant channel 112 via said end. Each of the coolant-guiding recesses 111 preferably extends linearly. In the preferred embodiment, the coolant-guiding recess 111 is only formed in the shank 11, but the coolant-guiding recess 111 is not limited thereto. In another preferred embodiment, the coolant-guiding recess 111 extends to the cutting portion 12.

Two opposite ends of the shank 11 are respectively a shank-outer end 113 and a shank-inner end 114. The shank-inner end 114 is disposed in the tool-fixing hole 921. An end of each of the coolant-guiding recesses 111 extends towards the shank-inner end 114 and preferably forms an opening on an end-surface of the shank-inner end 114 such that the coolant can flow into the coolant-guiding recess 111 without making a turn. Another end of the coolant-guiding recess 111 preferably extends to the shank-outer end 113, but not limited thereto as long as said another end of the coolant-guiding recess 111 protrudes out from the tool-fixing hole 921.

The cutting portion 12 is formed on the shank-outer end 113 of the shank 11 and protrudes out from the tool-fixing hole 921. The cutting portion 12 has one or multiple cutting edges 121. To be precise, the cutting portion 12 is disk-shaped, and is preferably round disk-shaped.

The cutting edges 121 are formed on an outer annular surface of the cutting portion 12, and the cutting portion 12 is larger in width than the shank 11 such that the cutting portion 12 is capable of cutting a side surface of a workpiece 93 to form a groove.

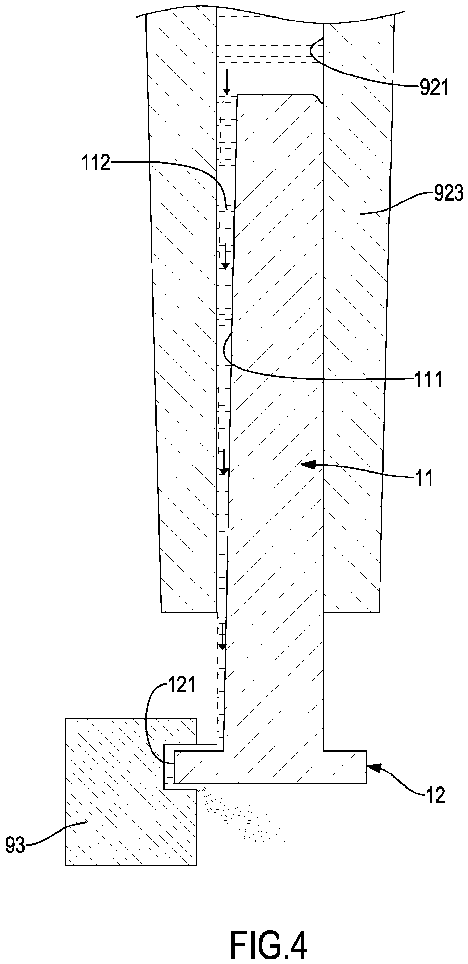

With reference to Fig. 4, each of the coolant channels 112 formed by the coolant-guiding recess 111 makes the coolant from the coolant-supply system 922 jetted out toward the cutting portion 12. The jetted coolant travels along an outer surface of the cutting portion 12 to the cutting edges 121 such that the cutting portion 12 is continuously cooled down by the coolant when the cutting portion 12 cuts the side surface of the workpiece 93 to form the groove.

A cross-sectional area of each of the coolant-guiding recesses 111 reduces from the shank 11 toward the cutting portion 12 such that the coolant channel 112 gradually becomes narrower, thereby increasing a flow speed of the coolant while exiting the coolant channel 112. To be specific, a width and/or a depth of each of the coolant-guiding recess 111 gradually reduces from the shank 11 toward the cutting portion 12, but the coolant-guiding recesses are not limited thereto.

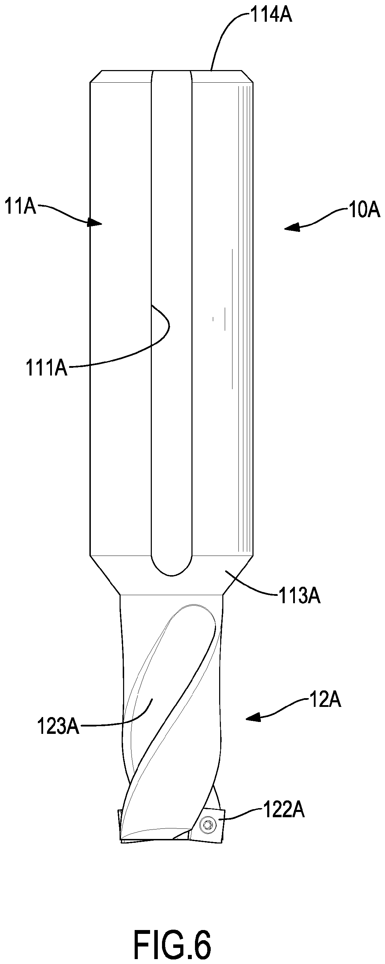

With reference to Fig. 6, a second embodiment of the present invention is substantially same as the first embodiment mentioned above, but the differences are that the cutting portion 12A is rod-shaped, and the cutting portion 12A is smaller in width than the shank 11A. Moreover, multiple helical chip-flutes 123A are formed in the cutting portion 12A.

The cutting portion 12A has no integrally formed cutting edge, but instead one or multiple inserts 122A is/are mounted to the cutting portion 12A. An end of each coolant-guiding recess 111A forms an opening on an end-surface of the shank-inner end 114A, and another end of each coolant-guiding recess 111A forms an opening on an end-surface of the shank-outer end 113A. The cutting tool 10A in the second embodiment is preferably an end mill of a face mill.

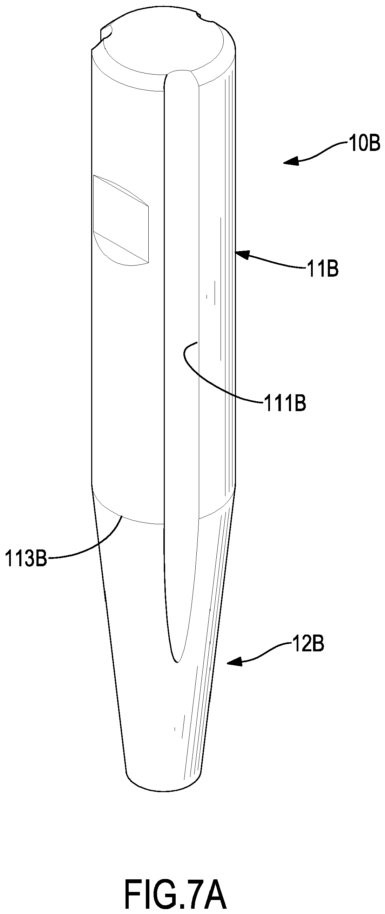

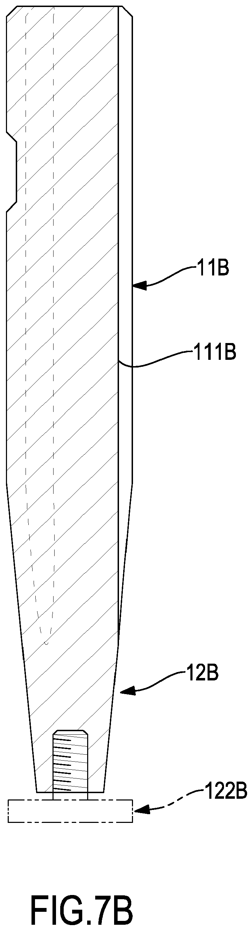

With reference to Fig. 7A and Fig. 7B, a third embodiment of the present invention is substantially same as the second embodiment, but the differences are that the cutting portion 12B is conical. The insert 122B is removably mounted to an outer end of the cutting portion 12B and is disposed on a centerline of the cutting tool 10B. Moreover, the coolant-guiding recesses 111B further extend to the cutting portion 12B from the shank-outer end 113B.

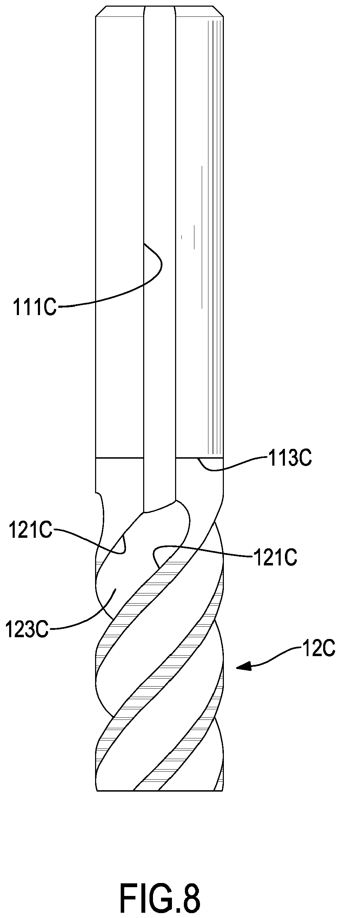

With reference to Fig. 8, a fourth embodiment of the present invention is substantially same as the second embodiment, but the difference is that multiple cutting edges 121C are formed on an outer annular surface of the rod-shaped cutting portion 12C, and each of the cutting edges 121C is preferably helical in shape. An end of each of the coolant-guiding recesses 111C extends to the cutting portion 12C from the shank-outer end 113C, and is disposed between two adjacent ones of the cutting edges 121C.

To be precise, multiple helical chip-flutes 123C are formed in the cutting portion 12C, and each of the helical chip-flutes 123C is preferably disposed between two adjacent ones of the cutting edges 121C. An end of each of the coolant-guiding recesses 111C is connected to one of the helical chip-flutes 123C to improve chip evacuation performance of the coolant.

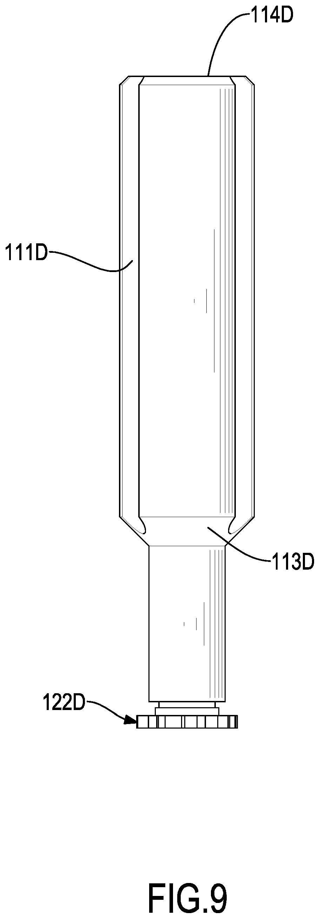

With reference to Fig. 9, a fifth embodiment of the present invention is substantially same as the second embodiment. An end of each coolant-guiding recess 111D forms an opening on an end-surface of the shank-inner end 114D, and another end of each coolant-guiding recess 111D forms an opening on an end-surface of the shank-outer end 113D. The difference of the fifth embodiment is that the insert 122D is disk-shaped and is replaceable.

In summary, by forming the coolant-guiding recesses 111 in the outer peripheral surface of the shank 11, the cutting tool 10 is capable of providing coolant through function when mounted to the machine tool 92, thereby saving tremendous machining cost.

Moreover, because the coolant-guiding recess 11 extends along the lengthwise direction of the shank, 11, the coolant is naturally jetted toward the cutting edges 121 or the inserts 122A when the cutting portion 12 is narrower than the shank 11, or the coolant naturally travels along an outer surface of the cutting portion 12 to the cutting edge 121 or the insert 122A when the cutting portion is wider than the shank. As a result, the present invention enables the coolant to continuously cool down a cutting area. Additionally, the coolant-guiding recesses 111 can extend linearly without turning, thereby reducing friction loss.

## Claims

1. A cutting tool (10) with through coolant, configured to be connected to a machine tool (92); the machine tool (92) has a tool-fixing hole (921); one end of the tool-fixing hole (921) is connected to a coolant-supply system (922); the cutting tool (10) is configured to be mounted in another end of the tool-fixing hole (921) and comprises:
a shank (11) being elongated; two opposite ends of the shank (11) being respectively a shank-outer end (113) and a shank-inner end (114); an outer peripheral surface of the shank (11) configured to be surrounded and tightly held by a hole-wall defined by the tool-fixing hole (921);
a cutting portion (12) formed on the shank-outer end (113) of the shank (11) and configured to protrude out from the tool-fixing hole (921); at least one cutting edge (121) formed on the cutting portion (12), or at least one insert (122A) removably mounted to the cutting portion (12);
the cutting tool (10) **characterized in that** at least one coolant-guiding recess (111) is formed in the outer peripheral surface of the shank (11); each of the at least one coolant-guiding recess (111) extends along a lengthwise direction of the shank (11), and is configured to form a coolant channel (112) together with the hole-wall of the tool-fixing hole (921); an end of the coolant channel (112) is connected to the coolant-supply system (922);
wherein, the coolant channel (112) formed by the at least one coolant-guiding recess (111) enables coolant from the coolant-supply system (922) to be jetted toward the cutting portion (12).

2. The cutting tool (10) as claimed in claim 1, wherein a cross-sectional area of each of the at least one coolant-guiding recess (111) gradually reduces from the shank (11) toward the cutting portion (12).

3. The cutting tool (10) as claimed in claim 1 or 2, wherein each of the at least one coolant-guiding recess (111) extends linearly.

4. The cutting tool (10) as claimed in claim 1 or 2, wherein an end of the at least one coolant-guiding recess (111) extends toward the shank-inner end (114) and forms an opening on an end-surface of the shank-inner end (114).

5. The cutting tool (10) as claimed in claim 1, wherein
the cutting portion (12) is disk-shaped, and the cutting portion (12) is larger in width than the shank (11);
the at least one cutting edge (121) includes a plurality of the cutting edges (121) formed on an outer annular surface of the cutting portion (12) and disposed around the cutting portion (12).

6. The cutting tool (10A) as claimed in claim 1, wherein
the cutting portion (12A) is rod-shaped, and the cutting portion (12A) is smaller in width than the shank (11A);
the at least one insert (122A) is removably mounted to the cutting portion (12A).

7. The cutting tool as claimed in claim 1, wherein an end of each of the at least one coolant-guiding recess (111C) extends to the cutting portion (12C).

8. The cutting tool as claimed in claim 1, wherein
the cutting portion (12C) is rod-shaped, and the at least one cutting edge (121C) includes a plurality of the cutting edges (121C) formed on an outer annular surface of the cutting portion (12C);
an end of each of the at least one coolant-guiding recess (111C) extends toward the cutting portion (12C) and is disposed between two adjacent ones of the cutting edges (121C).

9. The cutting tool as claimed in claim 1, wherein
the cutting portion (12C) is rod-shaped, and a plurality of helical chip-flutes (123C) are formed on the cutting portion (12C);
an end of each of the at least one coolant-guiding recess (111C) extends toward the cutting portion (12C) and is connected to one of the helical chip-flutes (123C).

10. The cutting tool (10) as claimed in any one of claims 5 to 9, wherein the cutting tool (10) is a milling cutter.

## Amended claims

### Amended claims in accordance with Rule 137(2) EPC.

1. A cutting tool (10) with through coolant, configured to be connected to a machine tool (92) that has a tool-fixing hole (921); the cutting tool (10) comprising:
a shank (11) being elongated; two opposite ends of the shank (11) being respectively a shank-outer end (113) and a shank-inner end (114); an outer peripheral surface of the shank (11) configured to be surrounded and tightly held by a hole-wall defined by the tool-fixing hole (921);
a cutting portion (12) formed on the shank-outer end (113) of the shank (11) and configured to protrude out from the tool-fixing hole (921); at least one cutting edge (121) formed on the cutting portion (12), or at least one insert (122A) removably mounted to the cutting portion (12);
wherein at least one coolant-guiding recess (111) formed in the outer peripheral surface of the shank (11); each of the at least one coolant-guiding recess (111) extending along a lengthwise direction of the shank (11), and configured to form a coolant channel (112) together with the hole-wall of the tool-fixing hole (921); the cutting tool (10) **characterized in that** a cross-sectional area of each of the at least one coolant-guiding recess (111) gradually reduces from the shank-inner end (114) of the shank (11) toward the cutting portion (12).

2. The cutting tool (10) as claimed in claim 1, wherein each of the at least one coolant-guiding recess (111) extends linearly.

3. The cutting tool (10) as claimed in claim 1, wherein an end of the at least one coolant-guiding recess (111) extends toward the shank-inner end (114) and forms an opening on an end-surface of the shank-inner end (114).

4. The cutting tool (10) as claimed in claim 1, wherein
the cutting portion (12) is disk-shaped, and the cutting portion (12) is larger in width than the shank (11);
the at least one cutting edge (121) includes a plurality of the cutting edges (121) formed on an outer annular surface of the cutting portion (12) and disposed around the cutting portion (12).

5. The cutting tool (10A) as claimed in claim 1, wherein
the cutting portion (12A) is rod-shaped, and the cutting portion (12A) is smaller in width than the shank (11A);
the at least one insert (122A) is removably mounted to the cutting portion (12A).

6. The cutting tool as claimed in claim 1, wherein an end of each of the at least one coolant-guiding recess (111C) extends to the cutting portion (12C).

7. The cutting tool as claimed in claim 1, wherein
the cutting portion (12C) is rod-shaped, and the at least one cutting edge (121C) includes a plurality of the cutting edges (121C) formed on an outer annular surface of the cutting portion (12C);
an end of each of the at least one coolant-guiding recess (111C) extends toward the cutting portion (12C) and is disposed between two adjacent ones of the cutting edges (121C).

8. The cutting tool as claimed in claim 1, wherein
the cutting portion (12C) is rod-shaped, and a plurality of helical chip-flutes (123C) are formed on the cutting portion (12C);
an end of each of the at least one coolant-guiding recess (111C) extends toward the cutting portion (12C) and is connected to one of the helical chip-flutes (123C).

9. The cutting tool (10) as claimed in any one of claims 4 to 8, wherein the cutting tool (10) is a milling cutter.
